# EUROPEAN PATENT APPLICATION

(11) **EP 3 916 358 A1**
(43) Date of publication of application: **01.12.2021**
(21) Application number: 21172511.4
(22) Date of filing: 06.05.2021
(51) Int. Cl.: G01C 23/00, G08G 5/00, B64D 45/04

(54) **TERRAIN AWARENESS AND WARNING (TAW) SYSTEMS AND METHODS ADAPTED FOR AN URBAN AIR MOBILITY VEHICLE (UAMV)**

(30) Priority: 27.05.2020 US 202016884349
(71) Applicant: Honeywell International Inc., Charlotte, NC 28202 (US)
(72) Inventor: BOUDA, Tomas, Charlotte, 28202 (US); KLANG, Pavel, Charlotte, 28202 (US); STRBA, Miroslav, Charlotte, 28202 (US)
(74) Representative: BRP Renaud & Partner mbB Rechtsanwälte Patentanwälte Steuerberater

(57) **Abstract**

Methods and systems for terrain awareness and warning (TAW) adapted for an urban air mobility vehicle (UAMV). The method includes receiving three-dimensional map data, geospatial data for the UAMV, and continuously rendering, by a display device, a lateral display showing the UAMV at a current location within the map data. The method includes constructing a buffer around the UAMV, and a vertical threshold that is a function of the current altitude. The method proceeds to identifying and displaying using a visually distinguishing technique, any objects, portions of objects, and features of objects in the map data that are within the buffer and have a height equal to or above the vertical threshold. The method thereby provides a close object awareness indicator that additionally has adaptable range.

## Description

### TECHNICAL FIELD

The following disclosure relates generally to terrain awareness and warning (TAW) systems and, more particularly, to terrain awareness and warning (TAW) systems and methods adapted for an urban air mobility vehicle (UAMV).

### BACKGROUND

The emerging market of UAM (Urban Air Mobility) includes UAMV (UAM vehicles) such as e-VTOL (electric Vertical Take-off and Landing) vehicles. As the number of available UAMV increases, there is expected to be an increased attention to the human factors area and human-machine interface, where interactions between a pilot and various systems occur.

UAMV operations are different from traditional aircraft or helicopter operations in a variety of significant ways, impacting terrain awareness requirements. Therefore, a technical problem is presented in providing terrain awareness and warning systems and methods adapted for an urban air mobility vehicles (UAMV). An available solution includes aircraft Terrain Awareness and Warning Systems (TAWS). Another available solution includes a TAWS for helicopters (called HTAWS), which is an alerting algorithm designed to support rotorcraft performance and operations. However, using existing TAWS or HTAWS for the UAM and VTOL market does not resolve some of the UAMV-specific problems.

Accordingly, technologically improved terrain awareness and warning (TAW) systems and methods adapted for an urban air mobility vehicle (UAMV) are desirable. Furthermore, other desirable features and characteristics of the present invention will be apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Provided is a terrain awareness and warning (TAW) system adapted for an urban air mobility vehicle (UAMV). The system includes: a source of three-dimensional map data comprising streets and objects; geospatial sensors that provide for the UAMV, a current location, a current heading, and a current altitude; and a display device configured to continuously render a lateral display showing the UAMV at the current location within the map data; a controller operationally coupled to the display device, source of map data, and the geospatial sensors, the controller programmed by programming instructions to: construct, at the current altitude of the UAMV, a buffer around the UAMV, the buffer being two-dimensional; construct a vertical threshold as a function of the current altitude; identify an object in the map data that is within the buffer and has a height equal to or above the vertical threshold; and display the identified object using a visually distinguishing technique with respect to objects of the map data that are not within the buffer and having a height equal to or above the vertical threshold.

In another embodiment, a method for terrain awareness and warning (TAW) adapted for an urban air mobility vehicle (UAMV) is provided. The method includes: receiving, by a controller, three-dimensional map data comprising streets and objects; receiving, by the controller, a current location, a current heading, and a current altitude from geospatial sensors; and continuously rendering, by a display device, a lateral display showing the UAMV at the current location within the map data; constructing, by the controller, at the current altitude of the UAMV, a buffer around the UAMV; constructing, by the controller, a vertical threshold as a function of the current altitude; identifying, by the controller, an object in the map data that is within the buffer and has a height equal to or above the vertical threshold; identifying, by the controller, an object having a first portion that is within the buffer and has the height equal to or above the vertical threshold, and a second portion that is external to the buffer or within the buffer and below the vertical threshold; and displaying the identified object using a visually distinguishing technique with respect to objects of the map data that are not within the buffer and having a height equal to or above the vertical threshold; and displaying the first portion using the visually distinguishing technique with respect to the second portion.

In an embodiment, a method for terrain awareness and warning (TAW) adapted for an urban air mobility vehicle (UAMV) is provided. The method includes: receiving, by a controller, three-dimensional map data comprising streets and objects; receiving, by the controller, a current location, a current heading, a current speed, and a current altitude from geospatial sensors; and continuously rendering, by a display device, a lateral display showing the UAMV at the current location within the map data; constructing, by the controller, at the current altitude of the UAMV, a buffer around the UAMV that has a shape that is a function of the UAMV current speed; constructing, by the controller, a vertical threshold as a function of the current altitude and a UAMV-specific ability to accelerate vertically; identifying, by the controller, an object having at least a first portion that is within the buffer and has the height equal to or above the vertical threshold, and a second portion that is external to the buffer or within the buffer and below the vertical threshold; and displaying the first portion using a visually distinguishing technique with respect to objects of the map data that are not within the buffer and having a height equal to or above the vertical threshold.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

At least one example of the present invention will hereinafter be described in conjunction with the following figures, wherein like numerals denote like elements, and:
FIG. 1 is a block diagram of a terrain awareness and warning (TAW) system adapted for an urban air mobility vehicle (UAMV), as illustrated in accordance with an exemplary embodiment of the present disclosure;
FIG. 2 is a series of images to illustrate various displays (vertical displays and horizontal displays) as may be generated and displayed on the display device of a UAMV, in accordance with an exemplary embodiment of the present disclosure; and
FIG. 3 is a flow chart of a method for terrain awareness and warning (TAW) adapted for an urban air mobility vehicle (UAMV), as may be implemented by the system of FIG. 1, in accordance with an exemplary embodiment of the present disclosure.

### DETAILED DESCRIPTION

The following Detailed Description is merely exemplary in nature and is not intended to limit the invention or the application and uses of the invention. The term "exemplary," as appearing throughout this document, is synonymous with the term "example" and is utilized repeatedly below to emphasize that the description appearing in the following section merely provides multiple non-limiting examples of the invention and should not be construed to restrict the scope of the invention, as set-out in the Claims, in any respect. As further appearing herein, the term "pilot" encompasses all users of the below-described aircraft system.

As mentioned, urban air mobility vehicles (UAMV) introduce several technical problems with respect to terrain awareness. Available solutions include using aircraft Terrain Awareness and Warning Systems (TAWS) or the TAWS for helicopters (called HTAWS). However, using existing TAWS or HTAWS for the UAM and VTOL market does not address some of the technical problems that are UAMV operation-specific, such as:
- UAMVs might take-off and land from specialized airdromes located on the ground or on buildings, where other obstacles are significantly close, requiring a level of granularity that existing terrain awareness systems cannot handle.
- UAMVs may operate at low altitude and experience trajectory infringements by obstacles that existing aircraft and rotorcraft do not (e.g. flights close to or between skyscrapers, overhangs, bridges, or any other buildings).
- UAMVs might operate in congested airspace with risk that other traffic might infringe its trajectory (e.g. high density of UAMVs in around specialized airdromes).
- UAMVs might perform slow flight close to an aerodrome and fast flight in dedicated corridors.
- UAMVs may be expected to be semi-automated or automated in a short time frame.

In addition, UAMVs are generally expected to be flown in the future by users who are not traditional aircraft/helicopters pilots with advanced aviation skills. Therefore, additional technical problems to solve include providing users of these possible single-user vehicles with appropriate:
- means to safely aviate, communicate and navigate
- visibility of the system - users should always be able to effectively monitor a system, meaning, pilots should be aware of
   ∘ system status (what the vehicle is doing)
   ∘ options (what are possible options provided by the system)
- situation awareness
   ∘ terrain awareness
   ∘ obstacle awareness
   ∘ traffic awareness

Specifically, existing TAWS or HTAWS may be insufficient for several UAMV-specific problem scenarios, such as:

**Problem 1:** Standard TAWS provides a user with a low situation awareness in cases where UAMV is flying slowly close to or between two buildings, this could easily cause the nuisance alert. Or, if the alert was suppressed by the user, or by a standard TAWS or HTAWS default, a user may get into the situation without a necessary alert.

**Problem 2:** Standard TAWS or HTAWS requires a significant amount of pilot-interaction related to zooming and pinning the map, in order to present only relevant parts of the map to the user of the UAMV. For example, many UAMV flights can be characterized by a few basic speed categories, for example, hover, slow movement, and fast movement. All of them requires slightly different visible range to be presented as the relevant parts of the map. Manually changing the map zoom and centering the map to continue to have the UAMV in a relevant part of the map on a display might be a demanding task during flight.

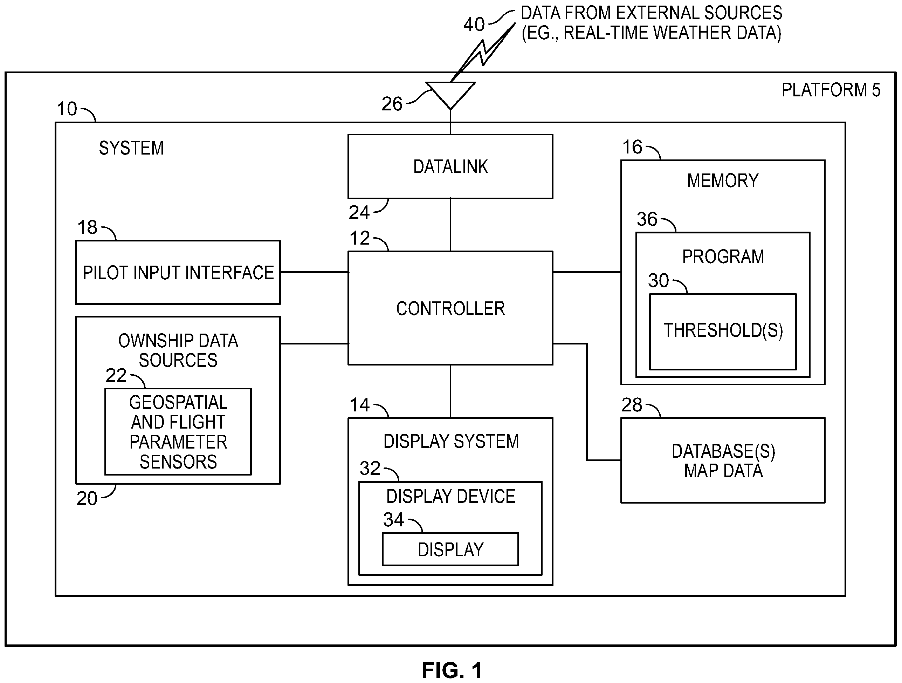

The present disclosure provides a solution to the above problems in the form of and enhanced terrain awareness and warning (TAW) system (FIG. 1, 10) that provides a Close Object Awareness Indicator with an adaptive range.

FIG. 1 is a block diagram of an enhanced terrain awareness and warning (TAW) system **10,** as illustrated in accordance with an exemplary and non-limiting embodiment of the present disclosure. The enhanced terrain awareness and warning (TAW) system **10** may be utilized onboard a mobile platform to provide enhanced terrain awareness, as described herein. In various embodiments, the mobile platform is urban air mobility vehicle **5,** which carries or is equipped with an enhanced terrain awareness and warning (TAW) system **10.** As schematically depicted in FIG. 1, an enhanced terrain awareness and warning (TAW) system **10** (shortened herein to "system" **10)** includes the following components or subsystems, each of which may assume the form of a single device or multiple interconnected devices: a controller **12** operationally coupled to: at least one display device **32,** which may optionally be part of a larger on-board display system **14;** computer-readable storage media or memory **16;** an optional input interface **18,** and ownship data sources **20** including, for example, an array of flight system status and geospatial sensors **22.** The system **10** may be separate from or integrated within: a flight management system (FMS) and/or a flight control system (FCS). The system **10** may also contain a datalink subsystem **24** including an antenna **26,** which may wirelessly transmit data to and receive data **(40)** from various sources external to system **10,** such as a cloud-based weather (WX) forecasting service.

Although schematically illustrated in FIG. 1 as a single unit, the individual elements and components of the system **10** can be implemented in a distributed manner utilizing any practical number of physically distinct and operatively interconnected pieces of hardware or equipment. When the system **10** is utilized as described herein, the various components of the system **10** will typically all be located onboard the UAMV **5.**

The term "controller," as appearing herein, broadly encompasses those components utilized to carry-out or otherwise support the processing functionalities of an enhanced terrain awareness and warning (TAW) system **10.** Accordingly, controller **12** can encompass or may be associated with any number of individual processors, flight control computers, navigational equipment pieces, computer-readable memories (including or in addition to memory **16),** power supplies, storage devices, interface cards, and other standardized components. In various embodiments, controller **12** includes or cooperates with at least one firmware and software program (generally, computer-readable instructions that embody an algorithm) for carrying-out the various process tasks, calculations, and control/display functions described herein. During operation, the controller **12** may be programmed with and execute the at least one firmware or software program, for example, program **36,** that embodies an enhanced terrain awareness algorithm, to thereby perform the various process steps, tasks, calculations, and control/display functions described herein.

Controller **12** may exchange data **40** with one or more external sources to support operation of the system **10** in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory **16** can encompass any number and type of storage media suitable for storing computer-readable code or instructions, such as the aforementioned software program **36,** as well as other data generally supporting the operation of the system **10.** Memory **16** may also store one or more threshold values, generically represented by box **30,** for use by an algorithm embodied in software program **36.**

A source of three-dimensional map data comprising streets and objects is part of system **10.** In certain embodiments, the source is one or more databases **28** employed to receive and store current high definition map data including geographical (terrain), buildings, bridges, and other structures, street maps, and navigational databases, which may be updated on a periodic or iterative basis to ensure data timeliness. In various embodiments, UAMV-specific parameters, such as a maximum ground speed and maximum vertical acceleration and deceleration, may be stored in the memory **16** or in the one or more databases **28,** and referenced by the program **36.** In various embodiments, these databases may be available online.

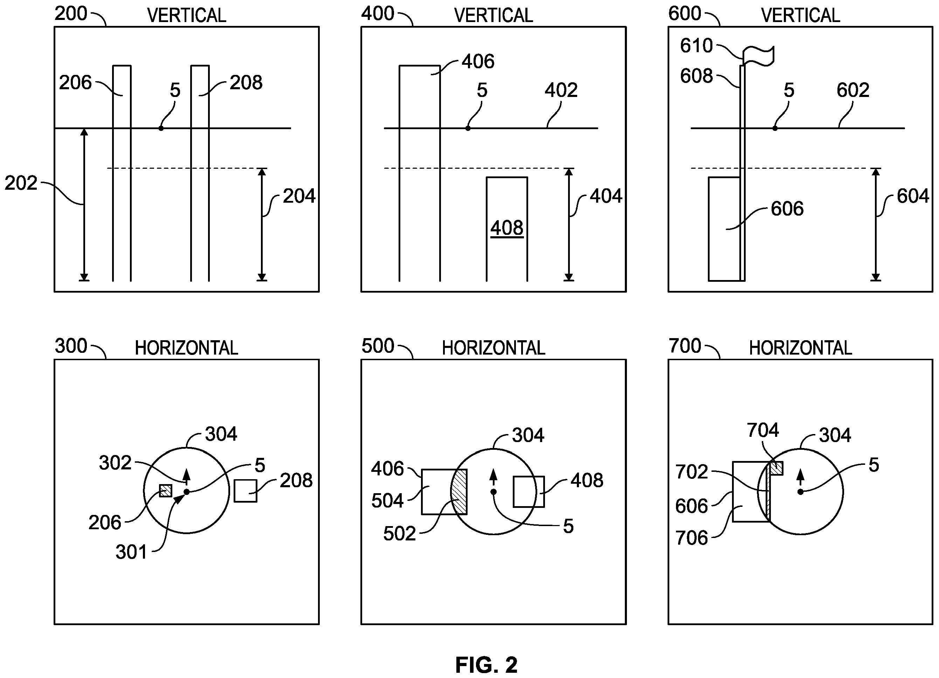

Flight parameter sensors and geospatial sensors **22** supply various types of data or measurements to controller **12** during UAMV flight. In various embodiments, the geospatial sensors **22** supply, without limitation, one or more of: remaining battery time, inertial reference system measurements providing a location (FIG. 2, **301),** Flight Path Angle (FPA) measurements, airspeed data, groundspeed data, vertical speed data, vertical acceleration data, altitude data (FIG. 2, **202),** attitude data including pitch data and roll measurements, yaw data, data related to UAMV weight, time/date information, heading (FIG. **2****, 302)** information, data related to atmospheric conditions, flight path data, flight track data, radar altitude data, geometric altitude data, wind speed and direction data. Further, in certain embodiments of system **10,** controller **12** and the other components of the system **10** may be included within or cooperate with any number and type of systems commonly deployed onboard UAMV including, for example, an FMS, an Attitude Heading Reference System (AHRS), an Instrument Landing System (ILS), and/or an Inertial Reference System (IRS), to list but a few examples.

With continued reference to FIG. 1, display device **32** can include any number and type of image generating devices on which one or more avionic displays may be produced. When the system 10 is utilized for a manned UAMV, display device **32** may be affixed to the static structure of the UAMV cockpit as, for example, a Head Down Display (HDD) or Head Up Display (HUD) unit. Alternatively, display device **32** may assume the form of a movable display device (e.g., a pilot-worn display device) or a portable display device, such as an Electronic Flight Bag (EFB), a laptop, or a tablet computer carried into the UAMV cockpit by a pilot.

At least one avionic display **34** is generated on display device **32** during operation of the system **10;** the term "avionic display" defined as synonymous with the term "aircraft-related display" and "cockpit display" and encompasses displays generated in textual, graphical, cartographical, and other formats. The system **10** can generate various types of lateral and vertical avionic displays **34** on which symbology, text annunciations, and other graphics pertaining to flight planning are presented for a pilot to view. The display device **32** is configured to continuously render at least a lateral display **34** showing the UAMV at the current location within the map data. The avionic display **34** generated and controlled by the system **10** can include alphanumerical input displays of the type commonly presented on the screens of MCDUs, as well as Control Display Units (CDUs) generally. Specifically, embodiments of avionic displays **34** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface, such as the above described touch screen display, is implemented as an integration of the pilot input interface **18** and a display device **32.** Via various display and graphics systems processes, the controller **12** may command and control the touch screen display generating a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element.

Turning now to FIG. 2, and with continued reference to FIG. 1, the operation of the system **10** adapted for an urban air mobility vehicle (UAMV) **5,** in accordance with various embodiments, is described in detail. The UAMV **5** is seen in vertical display **200** between an object **206** on the left and an object **208** on the right. The objects **206** and **208** are identified in the received map data. Non-limiting examples of objects **206** and **208** may include buildings, towers, bridges, flag poles, and the like. The UAMV 5 is flying at current altitude **202** above ground, and with a current heading **302** that is demarked with an arrow in horizontal display **300.** As mentioned, each of the current location **301,** the current heading **302,** and the current altitude **202** are received from onboard geospatial sensors **22.**

As part of the close object awareness indicator, the controller **12** constructs a buffer 304 around the UAMV **5,** the buffer is two-dimensional, in an X-Y plane (wherein the Z location for the buffer **304** is the current altitude of the UAMV **5).** In various embodiments, the controller **12** constructs the buffer to have a default circular shape with a center on the UAMV **5.**

In a first aspect of the close object awareness indicator provided by the system **10,** the controller determines which objects from the received map data are within the area enclosed by the buffer **304.** Comparing vertical display **200** to horizontal display **300** shows that object **206** is within the buffer **304** but object **208** is not within the buffer **304.**

In another aspect of the close object awareness indicator provided by the system **10,** the controller **12** constructs a vertical threshold as a function of the current altitude. The vertical threshold is shown in the vertical displays as measured from the ground (e.g., instead of measured from the current altitude of the UAMV **5)** to illustrate how it may be applied to heights of objects in the received map data. The controller **12** filters any objects in the map data that have a height equal to or greater than the vertical threshold. Viewing the vertical display **200,** one can see that objects **206** and **208** each exceed the vertical threshold **204.**

Combining these two aspects, the controller **12** identifies any objects in the map data that are (i) within the buffer **304,** and (ii) have a height equal to or above the vertical threshold, thereby providing a close object awareness indicator. Conditions (i) and (ii) are logically ANDed, meaning that both conditions must be true to be an identified object. Viewing the vertical display **200,** one can see that object **206** is both within the buffer **304** and above the vertical threshold **204.** In an embodiment, the system **10** displays, on the horizontal display **300,** the identified object **206** using a visually distinguishing technique with respect to objects (e.g., object **208)** of the map data that are not both within the buffer **304** and have a height equal to or above the vertical threshold **204.** In various embodiments, the controller **12** visually distinguishes the identified object by color highlighting it with respect to remaining objects. Other visually distinguishing techniques that the controller **12** may employ include hatching, shading, and overlaying patterns on the objects, portions of objects, and features that are within the buffer and meet or exceed the vertical threshold but leave remaining map data objects not visually distinguished (as shown in the figures, the remaining objects are outlined but un-filled).

In various embodiments, the controller **12** may further analyze the objects in the map data. For example, as shown in vertical display **400** and corresponding horizontal display **500,** the controller **12** may identify an object **406** having at least a first portion **502** that is within the buffer **304** and has the height equal to or above the vertical threshold **404,** and a second portion **504** that is external to the buffer **304** or within the buffer **304** and below the vertical threshold **404.** Object **408** is determined to be partially within the buffer **304,** but wholly below the vertical threshold **404.** The controller **12** may display the at least first portion **502** using the visually distinguishing technique with respect to the second portion **504.** Object **408** is displayed unfilled, or not using the visually distinguishing technique. As one may appreciate, this embodiment can be a superset of the examples in vertical display **200** and horizontal display 300 when the "at least a first portion" becomes 100% of the object, and any remaining portion therefore becomes zero. This interaction of the buffer and the vertical threshold provide the close object awareness, and the technique for displaying the information on a human-machine interface of the display provides the indicator.

The controller **12** may still further analyze the objects in the map data. For example, some objects may be further disintegrated into a cluster of features. At this level of granularity, non-limiting examples of features may include a main portion of a building, and then smaller features, such as, overhangs, awnings, bridges, flag poles, and the like. For example, as shown in vertical display **600** and corresponding horizontal display **700,** the controller **12** may identify an object **606** having a first feature (either or both of feature **608** and feature **610** can be the first feature) that is within the buffer **304** and has the height equal to or above the vertical threshold **604,** and a second feature that is (i) external to the buffer, or (ii) within the buffer and below the vertical threshold **604.** The controller **12** may display the first feature **(702** and **704)** using the visually distinguishing technique with respect to the second feature **706.**

In various embodiments, the geospatial sensors **22** further provide for the UAMV **5,** a current ground speed; and, the controller **12** is further programmed to construct the buffer **304** to have a shape that is a function of the current ground speed of the UAMV **5,** thereby providing an adaptive range feature. In these embodiments, the controller **12** may construct the buffer to be circular with a center on the UAMV **5** when the current ground speed of the UAMV is less than or equal to a predefined minimum speed, and then modify the shape of the buffer to provide more look-ahead awareness as compared to look behind awareness; for example, the controller **12** may modify the buffer to and egg shape or cone shape that extends farther in front of the UAMV **5** (front meaning the direction of the current ground speed), and is shorter behind the UAMV **5** when the current ground speed exceeds the predefined minimum speed. In one example, when the ground speed is greater than 10 km per hour, the buffer may extend 5 km in front of the UAMV **5** and only 1 kM behind the UAMV **5.** In another example, when ground speed is 5 km, the buffer may extend 3 NM in front and 1NM behind the UAMV **5.**

In various embodiments, the geospatial sensors **22** further provide for the UAMV, a current vertical speed; and the controller **12** is programmed to calculate the vertical threshold also as a function of the current vertical speed of the UAMV **5.** In other embodiments, the controller **12** may calculate the vertical threshold also as a function of a preprogrammed UAMV-specific ability to vertically accelerate or vertically decelerate.

As may be appreciated, the exemplary vertical displays and horizontal displays of FIG. 2 have been simplified to convey key concepts. In an application, each display is likely to provide a plurality of objects, and each lateral display may have any combination of entire elements, partial elements, and/or features (such as an awning or flag or bridge) that at least partially meet the criteria of within the buffer and has a height equal to or above the vertical threshold. For example, in an embodiment, the controller **12** may perform the operations of: identifying an object **206** in the map data that is within the buffer and has a height equal to or above the vertical threshold; identifying an object **406** having a first portion **502** that is within the buffer **304** and has the height equal to or above the vertical threshold **404,** and a second portion **504** that is external to the buffer **304** or within the buffer **304** and below the vertical threshold **404;** displaying the identified object using a visually distinguishing technique with respect to objects **208** of the map data that are not within the buffer and having a height equal to or above the vertical threshold; and displaying the first portion using the visually distinguishing technique with respect to the second portion.

In various embodiments, the way that the buffer **304** is displayed can vary. For example, it can be displayed with a border outline, for example, appearing as a circle. In other embodiments, the border of the buffer may not be displayed, and the shape of the buffer can only be deduced based on viewing the objects and portions of objects that are visually distinguished.

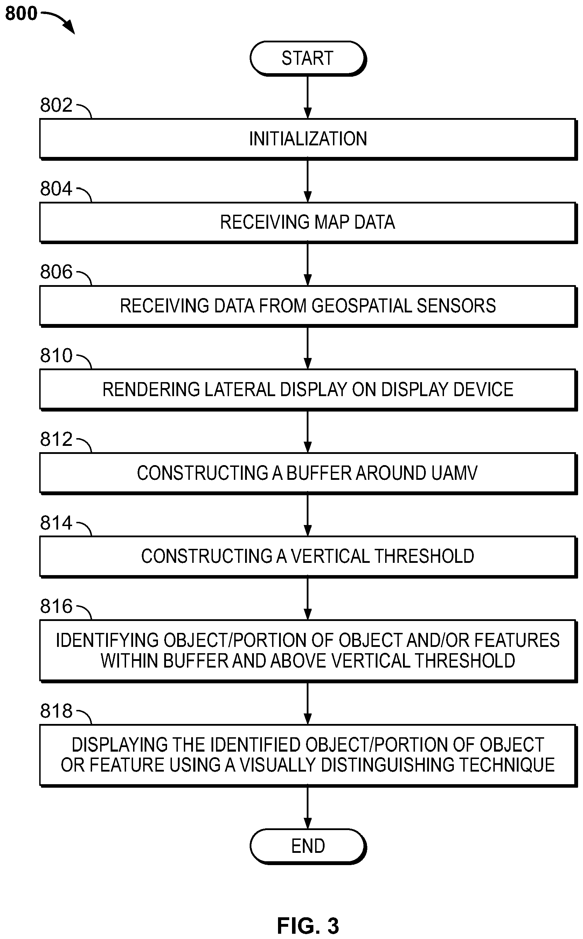

Turning now to FIG. 3, the system **10** described above may be implemented by a processor-executable method **800** providing enhanced terrain and awareness warnings. For illustrative purposes, the following description of method **800** may refer to elements mentioned above in connection with FIG. 1. In practice, portions of method **800** may be performed by different components of the described system. It should be appreciated that method **800** may include any number of additional or alternative tasks, the tasks shown in FIG. 3 need not be performed in the illustrated order, and method **800** may be incorporated into a more comprehensive procedure or method having additional functionality not described in detail herein. Moreover, one or more of the tasks shown in FIG. 3 could be omitted from an embodiment of the method **800** as long as the intended overall functionality remains intact.

At **802,** the system **10** is initialized. Initialization may include loading instructions and program **36** into a processor within the controller **12,** as well as loading UAMV-specific features, such as maximum vertical acceleration and/or deceleration capabilities. In an embodiment, at **804,** high definition map data is received by the controller **12,** and at **806** the controller receives the various signals and data from ownship data sources **20,** such as the geospatial sensors **22.** In another embodiment, **804** and **806** may be reversed, i.e., data may be received by the geospatial sensors first and then map data may be received/retrieved by the controller based on the data received by the geospatial sensors. At **810,** a lateral display is rendered on the display device. At **812,** the system **10** constructs the buffer around the UAMV **5,** as described above. At **812,** the system constructs the vertical threshold as described herein. At **816,** any combination of an object, a portion of an object, and a feature of an object can be identified as being both within the buffer **304** and at or above the vertical threshold. Note that this is a logical AND; i.e., both conditions must be met for this identification step. At **818,** the identified object, portion of object, and/or feature is displayed using a visually distinguishing technique with respect to remaining map objects within the view provided on the horizontal display. In various embodiments, color coding, such as using red, to indicate the identified object, portion of object, and/or feature is the visually distinguishing technique.

Thus, enhanced systems and methods for terrain awareness and warning are provided. The provided methods and systems provide an objectively improved human-machine interface with a discerning awareness buffer around the UAMV. The provided enhanced features allow for the awareness boundary to visually communicate an amount of safe space around the UAMV **5** by highlighting or otherwise visually distinguishing objects and features that are near enough to the UAMV 5 to warrant being navigated around. The technologically improved awareness buffer automatically changes size and shape in dynamic response to flight parameters and UAMV-specific features.

Although an exemplary embodiment of the present disclosure has been described above in the context of a fully-functioning computer system (e.g., an enhanced terrain awareness and warning (TAW) system **10** described above in conjunction with FIG. 1), those skilled in the art will recognize that the mechanisms of the present disclosure are capable of being distributed as a program product (e.g., an Internet-disseminated program or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements. While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. Various changes may be made in the function and arrangement of elements described in an exemplary embodiment without departing from the scope of the invention as set-forth in the appended Claims.

## Claims

1. A terrain awareness and warning (TAW) system adapted for an urban air mobility vehicle (UAMV), comprising:
a source of three-dimensional map data comprising streets and objects;
geospatial sensors that provide for the UAMV, a current location, a current heading,
and a current altitude; and
a display device configured to continuously render a lateral display showing the UAMV at the current location within the map data;
a controller operationally coupled to the display device, source of map data, and the geospatial sensors, the controller programmed by programming instructions to:
construct, at the current altitude of the UAMV, a buffer around the UAMV, the buffer being two-dimensional;
construct a vertical threshold as a function of the current altitude;
identify an object in the map data that is within the buffer and has a height equal to or above the vertical threshold; and
display the identified object using a visually distinguishing technique with respect to objects of the map data that are not within the buffer and having a height equal to or above the vertical threshold.

2. The TAW system of claim 1, wherein:
the geospatial sensors further provide for the UAMV, a current vertical speed; and
the controller is programmed to calculate the vertical threshold also as a function of the current vertical speed of the UAMV

3. The TAW system of claim 1, wherein the controller is programmed to calculate the vertical threshold also as a function of a preprogrammed UAMV-specific ability to vertically accelerate or decelerate.

4. The TAW system of claim 1, wherein the controller is programmed to visually distinguish the identified object by color highlighting it with respect to remaining objects.

5. The TAW system of claim 1, wherein:
the geospatial sensors further provide for the UAMV, a ground speed; and
the controller is further programmed to construct the buffer to have a shape that is a function of the current ground speed of the UAMV

6. The TAW system of claim 5, the controller is further programmed to construct the buffer to be circular with a center on the UAMV when the current ground speed of the UAMV is less than or equal to a predefined minimum speed.

7. The system of claim 1, wherein the controller is programmed to:
identify an object having a first portion that is within the buffer 304 and has the height equal to or above the vertical threshold, and a second portion that is external to the buffer or within the buffer and below the vertical threshold; and
display the first portion using the visually distinguishing technique with respect to the second portion.

8. The system of claim 1, wherein the controller is programmed to:
identify an object having a first feature that is within the buffer and has the height equal to or above the vertical threshold, and a second feature that is external to the buffer or within the buffer and below the vertical threshold; and
display the first feature using the visually distinguishing technique with respect to the second feature.

9. A method for terrain awareness and warning (TAW) adapted for an urban air mobility vehicle (UAMV), comprising:
receiving, by a controller, three-dimensional map data comprising streets and objects;
receiving, by the controller, a current location, a current heading, and a current altitude from geospatial sensors; and
continuously rendering, by a display device, a lateral display showing the UAMV at the current location within the map data;
constructing, by the controller, at the current altitude of the UAMV, a buffer around the UAMV;
constructing, by the controller, a vertical threshold as a function of the current altitude;
identifying, by the controller, an object in the map data that is within the buffer and has a height equal to or above the vertical threshold;
identifying, by the controller, an object having a first portion that is within the buffer and has the height equal to or above the vertical threshold, and a second portion that is external to the buffer or within the buffer and below the vertical threshold; and
displaying the identified object using a visually distinguishing technique with respect to objects of the map data that are not within the buffer and having a height equal to or above the vertical threshold; and
displaying the first portion using the visually distinguishing technique with respect to the second portion.

10. The method of claim 9, wherein the geospatial sensors further provide for the UAMV, a current vertical speed, and further comprising, calculating, by the controller, the vertical threshold also as a function of the current vertical speed of the UAMV

11. The method of claim 10, wherein the controller is programmed to calculate the vertical threshold also as a function of a preprogrammed UAMV-specific ability to vertically accelerate or decelerate.

12. The method of claim 9, wherein the controller is programmed to visually distinguish the identified object by color highlighting it with respect to remaining objects.

13. The method of claim 11, wherein the geospatial sensors further provide for the UAMV, a ground speed; and further comprising, constructing, by the controller, the buffer to have a shape that is a function of the current ground speed of the UAMV

14. The method of claim 13, further comprising constructing, by the controller, the buffer to be circular with a center on the UAMV when the current ground speed of the UAMV is less than or equal to a predefined minimum speed.

15. The method of claim 14, further comprising:
Identifying, by the controller, an object having a first feature that is within the buffer and has the height equal to or above the vertical threshold, and a second feature that is external to the buffer or within the buffer and below the vertical threshold; and
displaying the first feature using the visually distinguishing technique with respect to the second feature.
